# EUROPEAN PATENT SPECIFICATION

(11) **EP 1 567 574 B1**
(45) Date of publication and mention of the grant of the patent: **18.01.2012**
(21) Application number: 03796068.9
(22) Date of filing: 28.11.2003
(51) Int. Cl.: C08G 18/10, C08G 18/48, C08G 18/70, C08G 18/80, D06M 15/277, D06M 15/568, D06P 1/52

(54) **STABLE AQUEOUS DISPERSIONS OF NON-IONIC BLOCKED POLYISOCYANATES**
STABILE WÄSSRIGE DISPERSIONEN VON NICHTIONISCHEN BLOCKIERTEN POLYISOCYANATEN
DISPERSIONS AQUEUSES STABLES DE POLYISOCYANATES BLOQUES NON IONIQUES

(30) Priority: 02.12.2002 IT VA20020064
(43) Date of publication of application: 31.08.2005
(73) Proprietor: Lamberti Spa, 21041 Albizzate (IT)
(72) Inventor: ALANZO, Vito, I-20022 Castano Primo (MI) (IT); DI COSMO, Anna, 00049 Velletri (RM) (IT); CONTI, Dario, I-20022 Castano Primo (MI) (IT); LI BASSI, Giuseppe, I-21026 Gavirate (VA) (IT)
(86) International application number: PCT/EP2003/050909
(87) International publication number: WO 2004/050736

(56) References cited:
- EP-A- 0 060 430
- EP-A- 1 184 400
- EP-A1- 0 319 709
- WO-A-99/52961

## Description

The present invention relates to a process for the preparation of stable aqueous dispersions of non-ionic blocked polyisocyanates and to the dispersions obtained thereby. The aqueous dispersions of the invention are especially useful in combination with organic perfluorinated polymeric compounds in the oil- and/or water-repellent finishing of textiles, as they provide an excellent fixing of the organic perfluorinated polymers on textiles and high washing stability of the treatment.

The proce ss of the invention provides aqueous dispersions of non-ionic blocked polyisocyanates that, unlike the analogous ionic compounds, possess a good compatibility with other adjuvants normally used in textile finishing, independently from their ionicity.

Moreover, the aqueous dispersions of the invention are useful as cross-linkers for textile printing pastes.

One of the problem often encountered in the formulation of aqueous dispersions of non-ionic blocked polyisocyanates is their poor stability.

The process according to the invention allows the obtainment of highly stable aqueous dispersions of non-ionic blocked polyisocyanates.

In the present text with the expression "stable dispersions" we mean dispersions having average particle diameters lower than 1000 nm and that do not show sedimentation after seven days at room temperature.

### DESCRIPTION OF THE PRIOR ART

The use of aqueous dispersions of blocked polyisocyanates in textile, paint and coating industry is well known.

In the textile industry, and especially in the finishing of textiles, these dispersions are usually co-formulated with other products, mainly with fluorocarbon emulsions and/or dispersions and applied onto the article by thermal treatment.

During the heating step, the blocked polyisocyanate dissociates so that the isocyanate groups become available to react with the active hydrogen atoms that are contained in the fibrous material and/or in the perfluorinated polymer.

As reported in WO 9952961, the dispersions of ionically stabilised blocked polyisocyanates have the disadvantage that they are not necessarily compatible with other products of opposite ionicity that are generally used in the finishing of textiles, and therefore they can not be applied in combination with them.

To overcome this problem, WO 9952961 describes the use and production of non-ionic blocked polyisocyanates that unfortunately have the disadvantage to be unstable after being dispersed in water and cannot be easily used in industrial application.

US 5,693,737 describes the simultaneous presence of an ionic group (given by a sulfonate diol) and of an alkoxylated monofunctional long chain alcohol to stabilise the aqueous dispersions of blocked polyisocyanates; unfortunately the sulfonate diols used in US 5,693,737 are not easily available on the market and their synthesis is not simple.

EP 60430 reports the condensation products of polyether dials with di- or polyisocyanates but it does not describe aqueous dispersions of non-ionic blocked polyisocyanates.

### DETAILED DESCRIPTION

It has now surprisingly been found that the aqueous dispersions of non-ionic blocked polysocyanates obtained from the reaction of a polyisocyanate, a thermally de-blockable -N=C=O blocking agent which is de-blockable at a temperature of 90°C -160°C and a non-ionic alkoxylated diol having general formula I:

R₁CH₂O-(-CH₂CH₂O)n-(CH₂CHCH₃O)m-R₂ (I)

wherein: 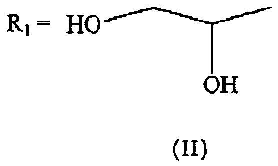 or 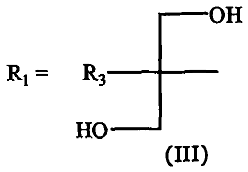 R₂ and R₃ are equal or different and are chosen among
methyl, ethyl, n-propyl, i-propyl, n-butyl, i-butyl;
n is a number from 0 to 40;
m is a number from 0 to 40;
n + m is a number from 20 to 80, preferably from 20 to 40,
are stable and particularly suited for the use in the textile field.

The preferred non-ionic alkoxylated diols of the invention have the general formula I:

R₁CH₂O-(-CH₂CH₂O)n-(CH₂CHCH₃O)m-R₂ (I)

wherein: 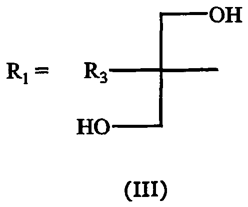 R₂ is methyl, R₃ is ethyl, n is a number from 15 to 30 and m is a number from 0 to 10; examples of said diols are the commercially available Tegomer ® D-3403 and Tegomer ® D-3123 from Th. Goldschmidt AG (DE).

The stability of the aqueous dispersions of the present invention is the more unexpected as the use of the analogue mono-functional alcohols, instead of the non-ionic alkoxylated diols, leads to the obtainment of unstable dispersions that are not suited for the industrial use.

The polyisocyanates utilisable according to the present invention are those commercially available and containing from 2 to 10 isocyanate groups per molecule and may be either of the aromatic, or the aliphatic, or the cycloaliphatic or the mixed type.

Examples of suitable polyisocyanates include:
A) diisocyanates, such as 1,6-hexamethylenediisocyanate, 1-isocyanate-3-isocyanate-methyl-3,5,5-trimethyl-cyclohexane (or isophoronediisocyanate), 4,4'-dicyciohexyl-methanediisocyanate, 2,4-toluenediisocyanate either alone or in admixture with 2,6-toluenediisocyanate, 4,4'-diphenyl-methanediisocyanate, metatetramethylxilylenediisocyanate or mixtures thereof;
B) tri- and higher-functionalised polyisocyanates, such as the compounds obtained by condensation of trimethylol propane or other polyols having functionality higher than three, and the diisocyanates of point A);
C) compounds obtained by trimerisation, biuretisation, urethanisation or allophanation of the polyisocyanates of the points A) and B), containing at least three isocyanate groups per molecule.

For the realisation of the present invention the preferred polyisocyanates are the isocyanurate obtained from 1,6-hexamethylenediisocyanate and the reaction product of trimethylol propane and toluenediisocyanate (its isomers 2,4 and 2,6 being in a weight ratio of 80:20).

The blocking agents useful for the realisation of the invention are the normally used blocking agents of the reversible kind, thermally deblockable, such as the compounds containing active methylenic groups (such as the derivatives of malonic acid and its esters, acetylacetone, acetoacetic acid and its esters); oximes; ε-caprolactames and lactames; pyrazoles; imidazoles.

The blocking agents are the ones de-blockable at a temperature of 90°-160°C.

Particularly useful for the realisation of the present invention are oximes and pyrazoles, and more specifically butanone oxime and 3,5-dimethylpyrazole.

According to a fundamental aspect of the invention the process for the preparation of the aqueous dispersions of non-ionic blocked polyisocyanates comprises the following steps:
a. a polyisocyanate and a non-ionic alkoxylated diol of the general formula

   R₁CH₂O-(-CH₂CH₂O)n-(CH₂CHCH₃O)m-R₂ (I)

   wherein 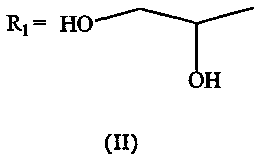 or 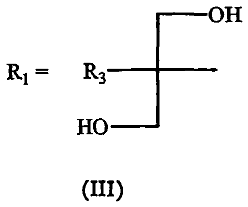 R₂ and R₃ are equal or different and are chosen among methyl, ethyl, n-propyl, i-propyl, n-butyl, i-butyl;
   n is a number from 0 to 40;
   m is a number from 0 to 40;
   n + m is a number from 20 to 80, preferably from 20 to 40
   are reacted at a temperature of 0°-120°C, their equivalent ratio being such that the percentage of free isocyanate groups in the resulting oligomer is from 3 to 10 and the percentage in weight of ethoxyl groups is from 10 to 40%, preferably from 20 to 30%;
b. the thus obtained oligomer is reacted with an amount of blocking agent such that the equivalent ratio of the isocyanate groups of the oligomer and the blocking agent is from 1:0.98 to 1:1.30, preferably from 1:1 to 1:1,20;
c. the thus obtained mixture is dispersed into water under vigorous stirring to obtain a dispersion having a solid content of from 20 to 40% by weight, preferably from 25 to 35% by weight.

Advantageously, step b. of the process according to the invention may be preceded by dilution of the reaction mixture obtained in a. with from 0.10 to 0.50 parts by weight of a water mixable polar solvent, said solvent being removed by distillation after completing of step c.; the preferred water mixable polar solvents are aliphatic ketones, such as methyl ethyl ketone, acetone, cyclohexanone.

The process of the invention allows the direct preparation of non-ionic blocked polyisocyanates which are stable for at least six months at ambient temperature, without the need of emulsifiers, surfactants or external dispersants.

The dispersions obtained according to the process of the invention can advantageously be used in the preparation of textile finishing aids, and particularly in the preparation of compositions for the oil- and/or water-repellent finishing of textiles containing organic perfluorinated polymeric compounds.

Said polymeric compounds are those normally used for these applications; among them we cite:
1) homopolymers of acrylic monomers having general formula:

   CₙF₂ₙ₊₁CH₂CH₂OC(O)-C(R)=CH₂

   wherein:
   R is methyl or hydrogen and n is a number from 5 to 12;
2) homopolymers of acrylic monomers having general formula:

   CₙF₂ₙ₊₁SO₂N(R')CH₂CH₂OC(O)-C(R)=CH₂

   wherein:
   R and R' are an alkyl group or hydrogen and n is a number from 5 to 12.
3) copolymers of the above cited fluorinated acrylic monomers with: butadiene, isoprene, chloroprene, styrene, α-methylstyrene, p-methylstyrene, vinyl halides (such as vinyl chloride, vinylidene chloride, vinylidene fluoride), vinyl esters (such as vinyl acetate, vinyl propionate, vinyl stearate), vinyl methyl ketones, esters or acrylic or methacrylic acid (such as methyl acrylate, methyl methacrylate, ethyl acrylate, ethyl methacrylate, propyl acrylate, butyl acrylate, 2-ethylhexyl acrylate or methacrylate, decyl acrylate, lauryl acrylate or methacrylate, stearyl methacrylate, N,N-dimethylaminoethyl methacrylate, 2-hydroxyethyl methacrylate, 2-hydroxypropyl methacrylate or glycidyl methacrylate), acrylamide, methacrylamide, N-methylol acrylamide, acrylonitrile, methacrylonitrile, N-substituted maleic imides, acrylates or methacrylates of ethoxylated alcohols having molecular weight smaller than 2000 daltons or mixture thereof.

For the preparation of the compositions useful for the oil- and/or water-repellent finishing of textiles, the dispersions of the invention are normally used in an amount of from 0.1 to 10% by weight on the total weight of the composition.

Advantageously the weight ratio between the solid fraction of the dispersion of the invention and the perfluorinated polymeric organic compounds of the oil- and/or water-repellent compositions is comprised between 1:1 and 1:15, more preferably between 1:2 and 1:7.

The finishing step can be performed by using the conventional techniques, for example by impregnation or spray technique, at a temperature of from 80° to 110°C followed by heat treatment at 130°-200°C for 0.5 -6 minutes.

The compositions for the oil- and/or water-repellent finishing of texiles containing the aqueous dispersions of the invention are stable and the textiles treated therewith exhibit high washing stability of the finishing.

The aqueous dispersions of the invention are moreover particularly useful as cross-linkers for textile printing pastes.

The textiles printed with the printing pastes including the aqueous dispersions of the invention as cross-linkers show high colour and washing fastness.

For the preparation of the printing pastes, the aqueous dispersion of the invention are used in an amount of from 0.3 to 5% by weight, preferably of from 1 to 3.5% by weight, on the total weight of the paste.

The examples that follow are presented to better illustrate the invention.

In the examples the following compounds are used:
Polyether 1 = Tegomer ® D-3403, ethoxylated diol according to the invention, having molecular weight 1220 g/mol and general formula I wherein R₁ is (III), R₂ is methyl, R₃ is ethyl, m=0; commercialised by Th. Goldschmidt AG (DE);
Polyether 2 = Tegomer® D-3123, ethoxylated and propoxylated diol according to the invention (EO/PO: 85/15), having molecular weight 1180 g/mol and general formula I wherein R₁ is (III), R₂ is methyl, R₃ is ethyl; commercialised by Th. Goldschmidt AG (DE);
Polyether 3 = polyether mono-alcohol obtained by ethoxylation of butanol, having molecular weight 1400 g/mol;
Polyether 4 = polyether mono-alcohol obtained by ethoxylation of butanol, having molecular weight 2000 g/mol;
Polyisocyanate 1 = Polurene® AD, reaction product of trimethylol propane and toluenediisocyanate (mixture of the isomers 2,4 and 2,6 in a ratio 80:20 by weight), having a NCO content of 13.0 ± 0,5% by weight, in ethyl acetate (with an active content of 75% by weight); commercialised by S.A.P.I.C.I. S.p.A. (Italy);
Polyisocyanate 2 = Tolonate® HDT LV2, product of isocyanuration of 1,6-diisocyanatohexane, with an NCO content of 23.0 ± 1% by weight (active content of 100% by weight); commercialised by Rhodia (France).

### Example 1

A reaction vessel, equipped with internal thermometer, stirrer and cooler, is filled, under nitrogen atmosphere and at room temperature with 200.0 g (609.756 meq) of Polyisocyanate 1 and 43.4 g of N-methylpyrrolidone, then 67.0 g (109.756 meq) of Polyether 1 are added under stirring. The reaction temperature is brought to 60°C and maintained at 60°-65°C for about two hours, until the titrimetric determination of the free NCO-groups still present gives a value of 6.8% by weight (value determined in this example as well as in the other examples according to the standard method ASTM D2572).

The reaction mixture is diluted with 100.0 g of acetone and subsequently 52.2. g (600.000 meq) of butanone oxime are added dropwise over a period of about 1 hour, the reaction temperature not exceeding 70°C.

After 1 hour of reaction the prepolymer is checked to be NCO-negative according to the I.R. spectrum and, at about 60 °C, 564.3 g of demineralised water are added at a high stirring speed.

The organic solvents (ethyl acetate and acetone) are distilled off in vacuum. A stable finely divided dispersion is obtained, with solids content of 30% by weight, pH 5.58, average particle diameters of 41.4 nm (determined by Coulter N4 Plus).

Percentage by weight of ethylene oxide groups related to the solids = 25% IR (cm⁻¹): 3278, 2921, 1727, 1671, 1600, 1536, 1224, 1073, 997, 954, 893, 819, 766, 635, 471.

### Example 2.

A reaction vessel, equipped with internal thermometer, stirrer and cooler, is filled, under nitrogen atmosphere and at room temperature with 200.0 g (609.756 meq) of Polyisocyanate 1 and 43.0 g of N-methylpyrrolidone, then 64.8 g (109,756 meq) of Polyether 2 are added under stirring.

The reaction temperature is brought to 60°C and maintained at 60°-65°C for about two hours, until the titrimetric determination of the free NCO-groups still present gives a value of 6.8% by weight.

The reaction mixture is then diluted with 100.0 g of acetone and subsequently 52.2 g (600.000 meq) of butanone oxime are added dropwise over a period of about 1 hour, the reaction temperature not exceeding 70°C.

After 1 hour of reaction the prepolymer is checked to be NCO-negative according to the I.R. spectrum and, at about 60 °C, 559.6 g of demineralised water are added at a high stirring speed.

The organic solvents (ethyl acetate and acetone) are distilled off in vacuum.

A stable milky dispersion is obtained, with solids content of 30% by weight, pH 4.86, average particle diameters of 59.7 nm (measured by Coulter N4 Plus).

Percentage by weight of ethylene oxide groups related to the solids = 21%

### Example 3.

A reaction vessel, equipped with internal thermometer, stirrer and cooler, is filled, under nitrogen atmosphere and at room temperature with 200.0 g (609.756 meq) of Polyisocyanate 1 and 44.2 g of N-methylpyrrolidone, then 67.0 g (109.756 meq) of Polyether 1 are added under stirring.

The reaction temperature is brought to 60°C and maintained at 60°-65°C for about two hours, until the titrimetric determination of the free NCO-groups still present gives a value of 6.8% by weight.

The reaction mixture is then diluted with 100.0 g of acetone and subsequently 48.0 g (500.000 meq) of 3,5-dimethylpyrazole are added.

After 1 hour of reaction the prepolymer is checked to be NCO-negative according to the I.R. spectrum and 574.0 g of demineralised water are added at a high stirring speed.

The organic solvents (ethyl acetate and acetone) are distilled off in vacuum.

A stable milky dispersion is obtained, with solids content of 30%, pH 5.84, average particle diameters of 287.4 nm (measured by Coulter N4 Plus).

Percentage by weight of ethylene oxide groups related to the solids = 25% IR (cm⁻¹): 3270, 2921, 1727, 1669, 1601, 1534, 1451, 1413, 1376, 1346, 1283, 1225, 1086, 1001, 968, 883, 817, 764, 744, 678, 658, 624, 508, 473,457,426.

### Example 4 (Comparative).

A reaction vessel, equipped with internal thermometer, stirrer and cooler, is filled, under nitrogen atmosphere and at room temperature with 200.0 g (609.756 meq) of Polyisocyanate 1 and 57.9 g of N-methylpyrrolidone, then 153.7 g (109.756 meq) of Polyether 3 are added under stirring.

The reaction temperature is brought to 60°C and maintained at 60°-65°C.

During the reaction the viscosity of the solution increases more and more, leading to gelification; the addition of 100.0 g of acetone reduces the viscosity only temporary, and the reaction is inevitably stopped.

### Example 5.

A reaction vessel, equipped with internal thermometer, stirrer and cooler, is filled, under nitrogen atmosphere and at room temperature with 150.0 g (819.672 meq) of Polyisocyanate 2 and 49.7 g of N-methylpyrrolidone, then 90.0 g (147.541 meq) of Polyether 1 are added under stirring.

The reaction temperature is brought to 60°C and maintained at 60°-65°C for about two hours, until the titrimetric determination of the free NCO-groups still present gives a value of 9.8% by weight. Subsequently 64.3 g (739.344 meq) of butanone oxime are added dropwise over a period of about 1 hour, the reaction temperature not exceeding 70°C.

After 1 hour of reaction the prepolymer is checked to be NCO-negative according to the I.R. spectrum and the reaction mixture is dispersed in 640.9 g of demineralised water at a high stirring speed.

A dispersion is obtained with solids content of 30%, pH 5.58, average particle diameters of 275.9 nm (measured by Coulter N4 Plus).

Percentage by weight of ethylene oxide groups related to the solids = 30%

### Example 6 (Comparative).

A reaction vessel, equipped with internal thermometer, stirrer and cooler, is filled, under nitrogen atmosphere and at room temperature with 75.0 g (409.836 meq) of Polyisocyanate 2 and 42.5 g of N-methylpyrrolidone, then 147.5 g (73.770 meq) of Polyether 4 are added under stirring.

The reaction temperature is brought to 60°C and mantained at 60°-65°C for about two hours, until the titrimetric determination of the free NCO-groups still present gives a value of 5.3% by weight.

Subsequently 32.3 g (336.066 meq) of 3,5-dimethylpyrazole are added slowly, the reaction temperature not exceeding 70°C.

After 1 hour of reaction the prepolymer is checked to be NCO-negative according to the I.R. spectrum and 552.1 g of demineralised water are added at a high stirring speed.

A coarse milky dispersion is obtained, with solids content of 30% and pH 6.19.

After 24 hours an evident sedimentation occurs and the average particle diameters can not be measured as it exceed s the upper limit of the instrument (3000 nm).

Percentage by weight of ethylene oxide groups related to the solids = 58%. For easy of consultation the most significant parameters of the dispersions obtained in the Example 1-6 are resumed in the following Table (Table 1).

**Table 1**

| EX. | POLYISOCYANATE | POLYETHER | R_{EQ} NCO/OH | BLOCKING AGENT | % NCO¹⁾ | DISPERSION STABILITY |
|---|---|---|---|---|---|---|
| 1 | Polyisocyanate 1 | Polyether 1 | 10/1.8 | MEKO³⁾ | 8.1 | YES |
| 2 | Polyisocyanate 1 | Polyether 2 | 10/1.8 | MEKO³⁾ | 8.1 | YES |
| 3 | Polyisocyanate 1 | Polyether 1 | 10/1.8 | 3,5-DMP⁴⁾ | 7.9 | YES |
| 4 | Polyisocyanate 1 | Polyether 3 | 10/1.8 | MEKO³⁾ | 6.1 | NO |
| 5 | Polyisocyanate 2 | Polyether 1 | 10/1.8 | MEKO³⁾ | 9.5 | YES |
| 6 | Polyisocyanate 2 | Polyether 4 | 10/1.8 | 3,5-DMP⁴⁾ | 5.5 | NO²⁾ |

| | | | | | | |
|---|---|---|---|---|---|---|
| 1) Calculated as % of available isocyanate groups after de-blocking 2) after about 2 months the dispersion is completely separated 3) Butanone oxime 4) 3,5-dimethylpirazole | | | | | | |

### APPLICATION EXAMPLES

### Textile finishing

Examples 7-9 resume the data obtained from the application tests conducted with the compositions for the oil- and water-repellent finishing of textiles, prepared with the dispersions described in the Examples 1, 2, 3, 5.

The oil- and water-repellent effect was determined using the test methods described below.

Water-repellency: the textile samples are evaluated according to AATCC-22 (Spray-test).

The water-repellency values are given according to the following scale:

| | |
|---|---|
| 100 | No wetting, nor water drops on the surface |
| 90 | No wetting, but small water drops on the surface |
| 80 | Surface wetted on spray points |
| 70 | Surface partially wet |
| 50 | Surface totally wet |
| 0 | Wetting on the entire surface and back |

Oil-repellency: the textile samples are evaluated according to AATCC-118.

The oil-repellency values are attributed according to the following scale, this test method being based on the resistance to wetting of the finished fabric by eight different liquid hydrocarbons of varying surface tension; the assessment scale in this test method covers grades from 1 to 8, grade 8 being the best (greatest repellent effect).

| Oil repellency | Composition |
|---|---|
| 1 | Liquid paraffin (Kaydol) |
| 2 | 65:35- Nujol : n-hexadecane |
| 3 | n-hexadecane |
| 4 | n-tetradecane |
| 5 | n-dodecane |
| 6 | n-decane |
| 7 | n-octane |
| 8 | n-heptane |

### Textile printing.

Example 10 reports the results obtained from the application tests conducted on textile samples printed with the printing pastes prepared using as cross-linkers the aqueous dispersions of the Examples 1, 2, 5.

The colour fastness of the prints was determined according to UNI 5153, that describes a method to establish the colour fastness of prints on fabrics of every nature when abraded and the consequent discharge of colour onto other fabrics.

The colour fastness was also determined according to UNI 7639, that describes a method to establish the colour fastness of a print on fabrics of different nature under the action of an artificial light source.

UNI 5153 describes a test where abrasion is produced by means of a dry fabric and another test where abrasion is produced by means of a wet fabric. An elevated value means a great colour fastness of the print according to both tests.

The values are from 1 to 5 according to UNI 5153 and from 1 to 8 according to UNI 7639. The washing fastness was also determined. The textile samples were washed 3 times at 40 °C (household washing), without intermediate drying and visually evaluated.

### Example 7

Cotton fabrics are impregnated at Foulard with the following aqueous compositions for the oil- and water-repellent finishing of fabrics (Table 2, values expressed as g/l), squeezed in the padding mangle to an approximately 50% liquor pick-up, dried and baked at 150 °C for 1.5 minutes.

**Table 2**

| | Comp. A | Comp. B | Comp. C | Comp. D | Comp. E |
|---|---|---|---|---|---|
| UNIDYNE®TG470⁽¹⁾ | 27 | 27 | 27 | 27 | 27 |
| MADEOL® NRW3⁽²⁾ | 1 | 1 | 1 | 1 | 1 |
| Acetic acid (water sol. 10%) | 1 | 1 | 1 | 1 | 1 |
| Example 1 | | 5 | | | |
| Example 2 | | | 5 | | |
| Example 3 | | | | 5 | |
| Example 5 | | | | | 5 |

| | | | | | |
|---|---|---|---|---|---|
| (1) fluorocarbon emulsion commercialised by DAIKIN INDUSTRIES LTD (JP) (2) surfactant commercialised by Cesalpinia Chemicals SpA (Italy) | | | | | |

After 24 hours of conditioning at room temperature the fabrics are tested with the oil- and water-repellency tests.

The fabrics were also tested after repeated washing cycles.

Washes were performed at 40° C in a domestic washing machine, using a domestic detergent and dried in tumbler at about 80° C for 60 min after each washing cycle.

The test results are listed in the following table (Table 3).

**Table 3**

| | Test method | No. of washes | | | |
|---|---|---|---|---|---|
| | | 0 | 1 | 3 | 5 |
| Composition A | AATCC 22 | 100 | 90 | 70/80 | 0 |
| | AATCC 118 | 4 | 4 | 2 | 2 |
| Composition B | AATCC 22 | 100 | 100 | 100 | 100 |
| | AATCC 118 | 4 | 6 | 4 | 3/4 |
| Composition C | AATCC 22 | 100 | 100 | 100 | 100 |
| | AATCC 118 | 4 | 6 | 3/4 | 4 |
| Composition D | AATCC 22 | 100 | 100 | 100 | 100 |
| | AATCC 118 | 4 | 6 | 3/4 | 3/4 |
| Composition E | AATCC 22 | 100 | 100 | 90 | 70 |
| | AATCC 118 | 3/4 | 4 | 3 | 2 |

### Example 8

Polyamide fabrics are impregnated at Foulard with the following aqueous compositions for the oil- and water-repellent finishing of fabrics (Table 4, values expressed as g/l), squeezed in the padding mangle to an approximately 40% liquor pick-up, dried and baked at 150 °C for 1.5 min.

**Table 4**

| | Comp. A | Comp. B | Comp. C | Comp. D | Comp. E |
|---|---|---|---|---|---|
| UNIDYNE®TG470⁽¹⁾ | 27 | 27 | 27 | 27 | 27 |
| MADEOLO NRW3⁽²⁾ | 1 | 1 | 1 | 1 | 1 |
| Acetic acid (water solution10%) | 1 | 1 | 1 | 1 | 1 |
| Example 1 | | 5 | | | |
| Example 2 | | | 5 | | |
| Example 3 | | | | 5 | |
| Example 5 | | | | | 5 |

| | | | | | |
|---|---|---|---|---|---|
| (1) fluorocarbon emulsion commercialised by DAIKIN INDUSTRIES LTD (JP) (2) surfactant commercialised by Cesalpinia Chemicals SpA (Italy) | | | | | |

After 24 hours of conditioning at room temperature the fabrics are tested in the oil and water repellence tests.

The fabrics were also tested after repeated washing cycles. Washes were performed at 40 °C in a domestic washing machine, using a domestic detergent and dried in tumbler at about 80° C for 60 min. after each washing cycle. The test results are listed in the following table (Table 5).

**Table 5**

| | Test method | No. of washes | | | |
|---|---|---|---|---|---|
| | | 0 | 1 | 3 | 5 |
| Composition A | AATCC 22 | 100 | 100 | 100 | 100/90 |
| | AATCC 118 | 3 | 2 | 1 | 0 |
| Composition B | AATCC 22 | 100 | 100 | 100 | 100 |
| | AATCC 118 | 3/4 | 2/3 | 1/2 | 1/2 |
| Composition C | AATCC 22 | 100 | 100 | 100 | 100 |
| | AATCC 118 | 3/4 | 2/3 | 1 | 0 |
| Composition D | AATCC 22 | 100 | 100 | 100 | 100 |
| | AATCC 118 | 3 | 1/2 | 1 | 1/2 |
| Composition E | AATCC 22 | 100 | 100 | 100 | 100 |
| | AATCC 118 | 2 | 1 | 1 | 1 |

### Example 9

Polyester fabrics are impregnated at Foulard with the following aqueous compositions for the oil- and water-repellent finishing of fabrics (Table 6, values expressed as g/l), squeezed in the padding mangle to an approximately 30% liquor pick-up, dried and baked at 150 °C for 1.5 minutes.

**Table 6**

| Composition | Comp. A | Comp. B | Comp. C | Comp. D | Comp. E |
|---|---|---|---|---|---|
| UNIDYNE®TG470⁽¹⁾ | 27 | 27 | 27 | 27 | 27 |
| MADEOL NRW3⁽²⁾ | 1 | 1 | 1 | 1 | 1 |
| Acetic acid (water sol.10%) | 1 | 1 | 1 | 1 | 1 |
| Example 1 | | 5 | | | |
| Example 2 | | | 5 | | |
| Example 3 | | | | 5 | |
| Example 5 | | | | | 5 |

| | | | | | |
|---|---|---|---|---|---|
| (1) fluorocarbon emulsion commercialised by DAIKIN INDUSTRIES LTD (JP) (2) surfactant commercialised by Cesalpinia Chemicals SpA (Italy) | | | | | |

After 24 hours of conditioning at room temperature the fabrics are tested in the oil- and water-repellency tests. The fabrics were also tested after repeated washing cycles. Washes were performed at 40°C in a domestic washing machine, using a domestic detergent and dried in tumbler at about 80° C for 60 min. after each washing cycle.

The test results are listed in the following table (Table 7).

**Table 7**

| Finish | Test method | After washes | | | |
|---|---|---|---|---|---|
| | | 0 | 1 | 3 | 5 |
| Composition A | AATCC 22 | 80 | 0 | 0 | 0 |
| | AATCC 118 | 4 | 1 | 0 | 0 |
| Composition B | AATCC 22 | 100 | 90 | 80 | 70 |
| | AATCC 118 | 3/4 | 2 | 1/2 | 1 |
| Composition C | AATCC 22 | 100 | 90/80 | 80 | 70/50 |
| | AATCC 118 | 3/4 | 1 | 1 | 0 |
| Composition D | AATCC 22 | 100 | 90/80 | 70 | 70/50 |
| | AATCC 118 | 3 | 1 | 1 | 0 |
| Composition E | AATCC 22 | 90 | 70 | 0 | 0 |
| | AATCC 118 | 1 | 1 | 1 | 0 |

### Example 10

The printing pastes (paste A, B, C and D) were prepared according to the compositions listed in Table 8.

The thus obtained printing pastes were used for silkscreen printing on four cotton fabrics.

Printing was performed onto the Zimmer magnetic table with a 55 wires/cm screen, by means of a 6 mm roller, at a rate of 50 (grades 10÷100), a pressure of 3 (grades 1÷6), in a single step.

After drying at 80°C, the prints were subsequently fixed at 160 °C for 3 min.

The colour fastness of the four cotton fabrics printed with the printing pastes A-D are listed in the following Table 9.

**Table 8**

| 9 | Paste A | Paste B | Paste C | Paste D |
|---|---|---|---|---|
| water | 782 | 782 | 782 | 782 |
| DEFOMEX SI ⁽¹⁾ | 3 | 3 | 3 | 3 |
| Ammonia 28 Bè | 5 | 5 | 5 | 5 |
| Binder Neoprint L 45⁽²⁾ | 150 | 150 | 150 | 150 |
| Clear DP-GP⁽³⁾ | 20 | 20 | 20 | 20 |
| Blue Neoprint LBS⁽⁴⁾ | 40 | 40 | 40 | 40 |
| Lerisene VHF⁽⁵⁾ | 15 | | | |
| Example 1 | | 25 | | |
| Example 2 | | | 25 | |
| Example 5 | | | | 25 |

| | | | | |
|---|---|---|---|---|
| (1) Defoamer commercialised by Lamberti S.p.A (Italy) (2) Ethyl-acrylate aqueous dispersion having an active content of 45% commercialised by Lamberti S.p.A. (Italy) (3) Syntethic polyacrylate thickener partially neutralised with ammonia; commercialised by Lamberti S.p.A. (Italy) (4) Water dispersion of an organic pigment (C.I. Pigment Blue 15: 1); commercialised by Lamberti S.p.A. (Italy) (5) Melamine resin with solids content of 50%; commercialised by Lamberti S.p.A. (Italy) | | | | |

**Table 9**

| | Test method | Evaluation | |
|---|---|---|---|
| Fabric printed with Paste A (comparative) | UNI 5153 | Dry | Wet |
| | | 1/2 | 4 |
| | UNI7639 | >6* | |
| Fabric printed with Paste B | UNI 5153 | Dry | Wet |
| | | 3/4 | 3/4 |
| | UNI 7639 | >6* | |
| Fabric printed with Paste C | UNI 5153 | Dry | Wet |
| | | 3/4 | 4 |
| | UNI7639 | >6* | |
| Fabric printed with Paste D | UNI 5153 | Dry | Wet |
| | | 4 | 4 |
| | UNI 7639 | >6* | |

| | | | |
|---|---|---|---|
| *After 141h of exposition the degradation of the fabric n° 6 of the blue scale begins, while the cotton fabrics printed with the Paste A-D do not show any visible degradation. | | | |

The cotton fabrics printed with the printing pastes prepared with the dispersions of this invention (Paste B, C and D) exhibit a washing fastness that is equal to that of the fabric printed with Paste A, which contains as cross-linker a standard melamine resin; they exhibit therefore a good washing fastness.

## Claims

1. Aqueous dispersions of non-ionic -N=C=O blocked polyisocyanates obtained from the reaction of:
(i) a polyisocyanate;
(ii) a thermally de-blockable -N=C=O blocking agent which is deblockable at a temperature of 90°-160°C; and
(iii) a non-ionic alkoxylated diol having general formula I:
R₁CH₂O-(-CH₂CH₂O)n-(CH₂CHCH₃O)m-R₂ (I)
wherein: 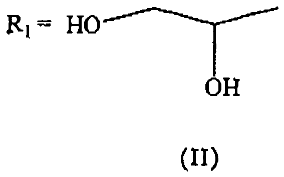 or 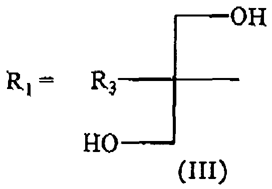 R₂ and R₃ are equal or different and are chosen among
methyl, ethyl, n-propyl, i-propyl, n-butyl, i-butyl;
n is a number from 0 to 40;
m is a number from 0 to 40;
n + m is a number from 20 to 80.

2. Aqueous dispersions of non-ionic -N=C=O blocked polyisocyanates according to claim 12, wherein n + m is a number from 20 to 40.

3. Aqueous dispersions of non-ionic -N=C=O blocked polyisocyanates according to claim 12 or 22, wherein the non-ionic alkoxylated diol (iii) has the general formula I:
R₁CH₂O-(-CH₂CH₂O)n-(CH₂CHCH₃O)m-R₂ (I)
wherein: 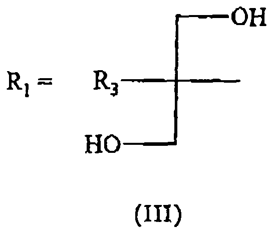 R₂ is methyl, R₃ is ethyl, n is a number from 15 to 30 and m is a number from 0 to 10.

4. Aqueous dispersions of non-ionic -N=C=O blocked polyisocyanates according to any of the preceding claims, wherein the polyisocyanate (i) is the isocyanurate obtained from 1,6-hexamethylenediisocyanate and the reaction product of trimethylol propane and toluenediisocyanate (its isomers 2,4 and 2,6 being in a weight ratio of 80:20).

5. Aqueous dispersions of non-ionic -N=C=O blocked polyisocyanates according to any of the preceding claims, wherein the blocking agent (ii) is 3,5-dimethylpyrazole.

6. Process for the preparation of the aqueous dispersions of non-ionic -N=C=O blocked polyisocyanates of claims from 1 to 5 comprising the following steps:
a. a polyisocyanate (i) and a non-ionic alkoxylated diol (iii) of the general
R₁CH₂O-(-CH₂CH₂O)n-(CH₂CHCH₃O)m-R₂ formula (I)
wherein 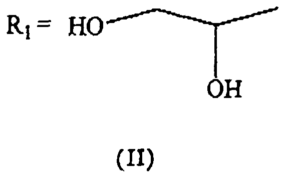 or 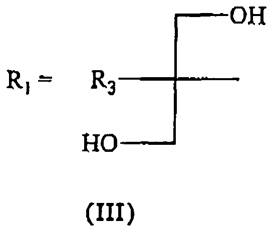 R₂ and R₃ are equal or different and are chosen among methyl, ethyl, n-propyl, i-propyl, n-butyl, i-butyl;
n is a number from 0 to 40;
m is a number from 0 to 40;
n + m is a number from 20 to 80,
are reacted at a temperature of 30°-120°C, their equivalent ratio being such that the percentage of free isocyanate groups in the resulting oligomer is from 3 to 10 and the percentage in weight of ethoxyl groups is from 10 to 40%;
b. the thus obtained oligomer is reacted with an amount of a thermally de-blockable blocking agent which is deblockable at a temperature of 90°-160°C (ii) such that the equivalent ratio of the isocyanate groups of the oligomer and the blocking agent (ii) is from 1:0,98 to 1:1.30;
c. the thus obtained mixture is dispersed into water under vigorous stirring to obtain a dispersion having a solid content of from 20 to 40% by weight.

7. Process for the preparation of aqueous dispersions of non-ionic -N=C=O blocked polyisocyanates according to claim 62, wherein the non-ionic alkoxylated diols (iii) have the general formula I:
R₁CH₂O-(-CH₂CH₂O)n-(CH₂CHCH₃O)m-R₂ (I)
wherein: 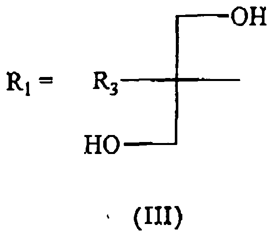 R₂ is methyl, R₃ is ethyl, n is a number from 15 to 30 and m is a number from 0 to 10.

8. Process for the preparation of aqueous dispersions of non-ionic -N=C=O blocked polyisocyanates according to claim 62, or 72, wherein the polyisocyanate (i) is the isocyanurate obtained from 1,6-hexamethylenediisocyanate and the reaction product of trimethylol propane and toluenediisocyanate (its isomers 2,4 and 2,6 being in a weight ratio of 80:20).

9. Process for the preparation of aqueous dispersions of non-ionic -N=C=O blocked polyisocyanates according to claim 62, 72, or 82, wherein the step b. is preceded by dilution of the reaction mixture obtained in a. with from 0.10 to 0.50 parts by weight of a water mixable polar solvent.

10. Process for the preparation of aqueous dispersions of non-ionic -N=C=O blocked polyisocyanates according to claim 92, wherein the water mixable polar solvent is chosen among methyl ethyl ketone, acetone, cyclohexanone.

11. Process for the preparation of aqueous dispersions of non-ionic -N=C=O blocked polyisocyanates according to any of the claims from 62 to 102, wherein in step a. the equivalent ratio of polyisocyanate (i) and alkoxylated diol (iii) is such that the percentage in weight of ethoxyl groups is from 20 to 30%.

12. Process for the preparation of aqueous dispersions of non-ionic -N=C=O blocked polyisocyanates according to any of the claims from 62 to 112, wherein the blocking agent (ii) is chosen from butanone oxime and 3,5-dimethylpyrazole.

13. process for the preparation of aqueous dispersions of non-ionic -N=C=O blocked polyisocyanates according to any of the claims from 62 to 122, wherein the amount of blocking agent (ii) is such that the equivalent ratio of the isocyanate groups of the oligomer and the blocking agent (ii) is from 1:1 to 1:1.2.

14. Process for the preparation of aqueous dispersions of non-ionic -N=C=O blocked polyisocyanates according to any of the claims from 62 to 132, wherein in step c. the mixture is dispersed into water under vigorous stirring to obtain a dispersion having a solid content of from 25 to 35% by weight.

15. Procedure for the oil- and/or water-repellent finishing of textiles, **characterised by** the fact that, as finishing agent, an aqueous composition is used, said aqueous composition comprising at least an organic perfluorinated polymeric compounds and from 0.1 to 10% by weight, on the total weight of the composition, of an aqueous dispersion of non-ionic -N=C=O blocked polyisocyanates according to any of claims from 12 to 52, the weight ratio between the solid fraction of the aqueous dispersion and the perfluorinated polymeric organic compounds being comprised between 1:1 and 1:15.

16. Textile printing pastes **characterised by** the fact that they contain from 0.3 to 5% by weight of an aqueous dispersion according to any of claims from 12 to 5.

17. Textile printing pastes **characterised by** the fact that they contain from 1 to 3.5% by weight of an aqueous dispersion according to any of claims from 12 to 5.

## Patentansprüche

1. Wässrige Dispersionen nicht-ionischer -N=C=O blockierter Polyisocyanate, die aus folgender Reaktion gewonnen werden:
(i) einem Polyisocyanat;
(ii) einem thermisch entblockierbaren -N=C=O Blockiermittel, das bei einer Temperatur von 90°-160°C entblockierbar ist; und
(iii) einem nicht-ionischen alkoxylierten Diol der allgemeinen Formel I:
R₁CH₂=-(-CH₂CH₂O)n-(CH₂CHCH₃O)m-R₂ (I)
worin: 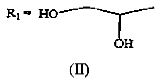 oder 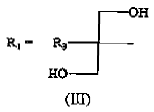 R₂ und R₃ gleich oder unterschiedlich sind und gewählt wurden aus Methyl, Ethyl,
n-Propyl, i-Propyl, n-Butyl, i-Butyl;
n eine Zahl zwischen 0 und 40 ist;
m eine Zahl zwischen 0 und 40 ist;
n + m eine Zahl zwischen 20 und 80 ist.

2. Wässrige Dispersionen nicht-ionischer -N=C=O blockierter Polyisocyanate gemäß Patentanspruch 1, worin n + m eine Zahl zwischen 20 und 40 ist,

3. Wässrige Dispersionen nicht-ionischer -N=C=O blockierter Polyisocyanate gemäß Patentanspruch 1), oder 2), worin das nicht-ionische alkoxylierte Diol (iii) die allgemeine Formel I aufweist:
R₁CH₂=-(CH₂CH₂O)n-(CH₂CHCH₃O)m-R₂ (I)
worin: 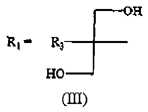 R₂ ein Methyl, R₃ ein Ethyl, n eine Zahl zwischen 15 und 30 und m eine Zahl zwischen 0 und 10 ist.

4. Wässrige Dispersionen nicht-ionischer -N=C=O blockierter Polyisocyanate gemäß jedem der vorangehenden Patentansprüche, worin das Polyisocyanat (i) das Isocyanurat ist, das aus 1,6-Hexamethylendiisocyanat und dem Reaktionsprodukt von Trimethylolpropan und Toluendiisocyanat (wobei dessen Isomere 2,4 und 2,6 ein Gewichtsverhältnis von 80:20 aufweisen) gewonnenen wurde.

5. Wässrige Dispersionen nicht-ionischer -N=C=O blockierter Polyisocyanate gemäß jedem der vorangehenden Patentansprüche, worin das Blockiermittel (ii) ein 3,5-Dimethylpyrazol ist.

6. Prozess zur Zubereitung der wässrigen Dispersionen nicht-ionischer -N=C=O blockierter Polyisocyanate gemäß der Patentansprüche 1 bis 5 ist, der folgende Schritte beinhaltet:
a. Ein Polyisocyanat (i) und ein nicht-ionisches alkoxyliertes Diol (iii) der allgemeinen Formel
R₁CH₂=-(-CH₂CH₂O)n-(CH₂CHCH₃O)m-R₂ (I)
worin 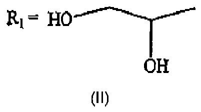 oder 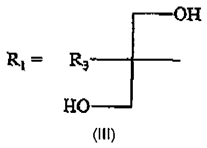 R₂ und R₃ gleich oder unterschiedlich sind und gewählt wurden aus Methyl, Ethyl, n-Propyl, i-Propyl, n-Butyl, i-Butyl;
n eine Zahl zwischen 0 und 40 ist;
m eine Zahl zwischen 0 und 40 ist;
n + m eine Zahl zwischen 20 und 80 ist,
bei einer Temperatur von 30°-120°C zur Reaktion gebracht werden, wobei deren Äquivalentverhältnis derart ist, dass der Prozentsatz der freien Isocyanatgruppen im resultierenden Oligomer zwischen 3 und 10 und der prozentuale Gewichtsanteil der Ethoxylgruppen zwischen 10 und 40% beträgt;
b. der so erhaltene Oligomer wird mit einer derartigen Menge eines thermisch entblockierbaren Blockiermittels (ii) zur Reaktion gebracht, dass das Äquivalentverhältnis der Isocyanatgruppen des Oligomers und des Blockiermittels (ii) zwischen 1:0.98 und 1:1.30 liegt;
c. die so erhaltene Mischung wird in Wasser unter energischem Rühren dispergiert, um eine Dispersion zu erhalten, die einen Feststoffgehalt zwischen 20 und 40% Gewichtsanteilen aufweist.

7. Prozess zur Zubereitung wässriger Dispersionen nicht-ionischer -N=C=O blockierter Polyisocyanate gemäß Patentanspruch 6), worin die nicht-ionischen alkoxylierten Diole (iii) folgende allgemeine Formel I aufweisen:
R₁CH₂=-(-CH₂CH₂O)ₙ-(CH₂CHCH₃O)m-R₂ (I)
worin: 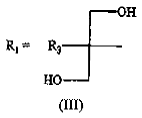 R₂ eine Methyl, R₃ ein Ethyl, n eine Zahl zwischen 15 und 30 und m eine Zahl zwischen 0 und 10 ist.

8. Prozess zur Zubereitung wässriger Dispersionen nicht-ionischer -N=C=O blockierter Polyisocyanate gemäß Patentanspruch 6) oder 7), worin das Polyisocyanat (i) das Isocyanat ist, das aus 1,6-Hexamethylendiisocyanat und dem Reaktionsprodukt von Trimethylolpropan und Toluendiisocyanat (wobei dessen Isomere 2,4 und 2,6 ein Gewichtsverhältnis von 80:20 aufweisen) gewonnen wurde.

9. Prozess zur Zubereitung wässriger Dispersionen nicht-ionischer -N=C=O blockierter Polyisocyanate gemäß Patentansprüche 6), 7) oder 8), worin dem Schritt b. die Verdünnung der in a. erhaltenen Reaktionsmischung mit von 0.10 bis 0.50 Gewichtsanteilen eines wassermischbaren polaren Lösungsmittels vorangeht.

10. Prozess zur Zubereitung wässriger Dispersionen nicht-ionischer -N=C=O blockierter Polyisocyanate gemäß Patentanspruch 9, worin das wassermischbare Lösungsmittel aus Methyl Ethyl, Keton, Aceton, Cyclohexanon gewählt wird.

11. Prozess zur Zubereitung wässriger Dispersionen nicht-ionischer -N=C=O blockierter Polyisocyanate gemäß jedem der Patentansprüche von 6) bis 10), worin in Schritt a. das Äquivalentverhältnis von Polyisocyanat (i) und alkoxyliertem Diol (ii) derart ist, dass der prozentuale Gewichtsanteil der Ethoxylgruppen zwischen 20 und 30% liegt.

12. Prozess zur Zubereitung wässriger Dispersionen nicht-ionischer -N=C=O blockierter Polyisocyanate gemäß jedem der Patentansprüche von 6) bis 11), worin das Blockiermittel (ii) aus Butanonoxim und 3,5-Dimethylpyrazol gewählt wird.

13. Prozess zur Zubereitung wässriger Dispersionen nicht-ionischer -N=C=O blockierter Polyisocyanate gemäß jedem der Patentansprüche von 6) bis 12), worin die Menge des Blockiermittels (ii) derart ist, dass das Äquivalentverhältnis der Isocyanatgruppen des Oligomers und des Blockiermittels (ii) zwischen 1:1 und 1:1.2 liegt.

14. Prozess zur Zubereitung wässriger Dispersionen nicht-ionischer -N=C=O blockierter Polyisocyanate gemäß jedem der Patentansprüche von 6) bis 13), worin in Schritt c. die Mischung in Wasser unter energischem Umrühren dispergiert wird, um eine Dispersion mit einem Feststoffgehalt zwischen 25 und 35% Gewichtsanteilen zu erhalten.

15. Prozedur für öl- und/oder wasserabweisende Textilveredelungen, dadurch charakterisiert, dass als Veredelungsmittel eine wässrige Zusammensetzung verwendet wird, wobei besagte wässrige Zusammensetzung mindestens eine organische perfluorierte Verbindung und zwischen 0.1 und 10% Gewichtsanteile des Gesamtgewichts der Zusammensetzung einer wässrigen Dispersion nicht-ionischer -N=C=O blockierter Polyisocyanate gemäß jedem der Patentansprüche von 1) bis 5) beinhaltet und das Gewichtsverhältnis zwischen dem Festanteil der wässrigen Dispersion und den perfluorierten polymeren organischen Verbindungen zwischen 1:1 und 1:15 liegt.

16. Textildruckpasten, dadurch charakterisiert, dass sie zwischen 0.3 und 5% Gewichtsanteile einer wässrigen Dispersion enthalten gemäß jedem der Patentansprüche von 1. bis 5.

17. Textildruckpasten, dadurch charakterisiert, dass sie zwischen 1 und 3.5% Gewichtsanteile einer wässrigen Dispersion enthalten gemäß jedem der Patentansprüche von 1, bis 5.

## Revendications

1. Dispersions aqueuses de polyisocyanates non ioniques à fonction -N=C=O bloquée obtenues en faisant réagir :
(i) un polyisocyanate;
(ii) un agent de blocage de la fonction -N=C=O déblocable thermiquement, pouvant être débloqué à une température de 90° à 160C ; et
(iii) un diol alcoxylé non ionique de formule générale I:
**R₁CH₂O-(-CH₂CH₂O)n-(CH₂CHCH₃O)m-R₂** **(I)**
dans laquelle 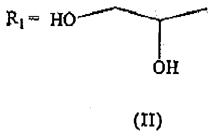 ou 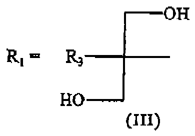 R₂ et R₃ sont identiques ou différents et sont choisis parmi
le méthyle, l'éthyle, le n-propyle, l'i-propyle, le n-butyle, l'i-butyle ;
n est un nombre de 0 à 40 ;
m est un nombre de 0 à 40 ;
n + m est un nombre allant de 20 à 80.

2. Dispersions aqueuses de polyisocyanates non ioniques à fonction -N=C=O bloquée selon la revendication 1, n + m étant un nombre de 20 à 40.

3. Dispersions aqueuses de polyisocyanates non ioniques à fonction -N=C=O bloquée selon la revendication 1 ou 2, le diol alcoxylé non ionique (iii) étant de formule générale I :
**R₁CH₂O-(-CH₂CH₂O)n-(CH₂CHCH₃O)m-R₂** **(I)**
dans laquelle : 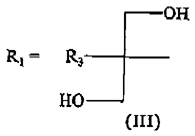 R₂ est le méthyle, R₃ est l'éthyle, n est un nombre de 15 à 30 et m est un nombre de 0 à 10.

4. Dispersions aqueuses de polyisocyanates non ioniques à fonction -N=C=O bloquée selon l'une quelconque des revendications précédentes, le polyisocyanate (i) étant l'isocyanurate obtenu à partir du 1,6-hexaméthylènediisocyanate et du produit de la réaction entre le triméthylol propane et le toluènediisocyanate (ses isomères 2,4 et 2,6 étant dans un rapport de 80:20 en poids).

5. Dispersions aqueuses de polyisocyanates non ioniques à fonction -N=C=O bloquée selon l'une quelconque des revendications précédentes, l'agent de blocage (il) étant le 3,5-diméthylpyrazole.

6. Procédé de préparation des dispersions aqueuses de polyisocyanates non ioniques à fonction -N=C=O bloquée selon les revendications 1 à 5, ledit procédé comprenant les étapes suivantes :
a. un polyisocyanate (i) et un diol alcoxylé non ionique (iii) de formule générale
**R₁CH₂O-(-CH₂CH₂O)n-(CH₂CHCH₃O)m-R₂** **(I)**
dans laquelle 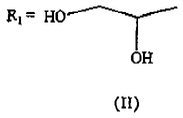 ou 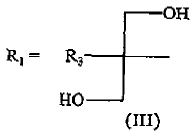 R₂ et R₃ sont identiques ou différents et sont choisis parmi
le méthyle, l'éthyle, le n-propyle, l'i-propyle, le n-butyle, l'i-butyle;
n est un nombre de 0 à 40 ;
m est un nombre de 0 à 40;
n + m est un nombre allant de 20 à 80,
sont mis à réagir à une température de 30° à 120 °C, leur proportion étant telle que le pourcentage de groupes isocyanate libres dans l'oligomère résultant va de 3 à 10 et le pourcentage en poids de groupes éthoxyle va de 10 à 40 % ;
b. l'oligomère ainsi obtenu est mis à réagir avec une quantité d'agent de blocage déblocable thermiquement à une température de 90° à 160°C (ii) telle que la proportion de groupes isocyanate de l'oligomère et d'agent de blocage (ii) va de 1:0,98 à 1:1,30 ;
c. le mélange ainsi obtenu est dispersé dans de l'eau sous agitation vigoureuse afin d'obtenir une dispersion ayant une teneur en solides de 20 à 40 % en poids.

7. Procédé de préparation des dispersions aqueuses de polyisocyanates non ioniques à fonction -N=C=O bloquée selon la revendication 6, les diols alcoxylés non ioniques (iii) étant de formule générale I:
**R₁CH₂O-(-CH₂CH₂O)ₙ-(CH₂CHCH₃O)m-R₂** **(I)**
dans laquelle : 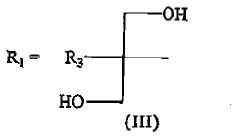 R₂ est le méthyle, R₃ est l'éthyle, n est un nombre de 15 à 30 et m est un nombre de 0 à 10.

8. Procédé de préparation des dispersions aqueuses de polyisocyanates non ioniques à fonction -N=C=O bloquée selon la revendication 6 ou 7, le polyisocyanate (i) étant isocyanurate obtenu à partir du 1,6-hexaméthylènediisocyanate et du produit de la réaction entre le triméthylol propane et le toluènediisocyanate (ses isomères 2,4 et 2,6 étant dans un rapport de 80:20 en poids).

9. Procédé de préparation des dispersions aqueuses de polyisocyanates non ioniques à fonction -N=C=O bloquée selon la revendication 6, 7 ou 8, l'étape (b) étant précédée par la dilution du mélange réactionnel obtenu en (a) avec 0,10 à 0,50 parties en poids d'un solvant polaire miscible à l'eau.

10. Procédé de préparation des dispersions aqueuses de polyisocyanates non ioniques à fonction -N=C=O bloquée selon la revendication 9, le solvant polaire miscible à l'eau étant choisi parmi la méthyléthylcétone, l'acétone, la cyclohexanone.

11. Procédé de préparation des dispersions aqueuses de polyisocyanates non ioniques à fonction -N=C=O bloquée selon l'une quelconque des revendications 6 à 10, selon lequel à l'étape (a), la proportion de polyisocyanate (i) et de diol alcoxylé (iii) est telle que le pourcentage en poids de groupes éthoxyle va de 20 à 30 %.

12. Procédé de préparation des dispersions aqueuses de polyisocyanates non ioniques à fonction -N=C=O bloquée selon l'une quelconque des revendications 6 à 11, l'agent de blocage (ii) étant choisi parmi l'oxime de butanone et le 3,5-diméthylpyrazole.

13. Procédé de préparation des dispersions aqueuses de polyisocyanates non ioniques à fonction -N=C=O bloquée selon l'une quelconque des revendications 6 à 12, la quantité d'agent de blocage (ii) étant telle que le rapport équivalent des groupes isocyanate de l'oligomère et de l'agent de blocage (ii) va de 1:1 à 1:1,2.

14. Procédé de préparation des dispersions aqueuses de polyisocyanates non ioniques à fonction -N=C=O bloquée selon l'une quelconque des revendications 6 à 13, selon lequel à l'étape (c), le mélange est dispersé dans l'eau sous agitation vigoureuse afin d'obtenir une dispersion ayant une teneur en solides de 25 à 35 % en poids.

15. Procédure de finissage de déperlance anti-eau et/ou huile des textiles **caractérisée en ce qu'**une composition aqueuse est utilisée en tant qu'agent de finissage, ladite composition aqueuse comprenant au moins un composé polymère organique perfluoré et de 0,1 à 10 % en poids, par rapport au poids total de la composition, d'une dispersion aqueuse de polyisocyanates non ioniques à fonction -N=C=O bloquée selon l'une quelconque des revendications 1 à 5, le rapport pondéral entre la fraction solide de la dispersion aqueuse et le composé polymère organique perfluoré étant compris entre 1:1 et 1:15.

16. Pâtes d'impression textile **caractérisées en ce qu'**elles contiennent de 0,3 à 5 % en poids d'une dispersion aqueuse selon l'une quelconque des revendications 1 à 5.

17. Pâtes d'impression textile **caractérisées en ce qu'**elles contiennent de 1 à 3,5 % en poids d'une dispersion aqueuse selon l'une quelconque des revendications 1 à 5.
